# EUROPÄISCHE PATENTSCHRIFT

(11) **EP 1 078 174 B1**
(45) Veröffentlichungstag und Bekanntmachung des Hinweises auf die Patenterteilung: **25.02.2004**
(21) Anmeldenummer: 99952107.3
(22) Anmeldetag: 17.05.1999
(51) Int. Cl.: F16D 3/74

(54) **ELASTISCHE WELLENKUPPLUNG**
ELASTIC SHAFT COUPLING
ACCOUPLEMENT D'ARBRE ELASTIQUE

(30) Priorität: 15.05.1998 DE 19821948
(43) Veröffentlichungstag der Anmeldung: 28.02.2001
(73) Patentinhaber: Hackforth GmbH, 44653 Herne (DE)
(72) Erfinder: WALTER, Jürgen, D-45721 Haltern (DE); FALZ, Ulrich, D-44267 Dortmund (DE)
(74) Vertreter: Behrendt, Arne, Dipl.-Ing.
(86) Internationale Anmeldenummer: PCT/EP1999/003401
(87) Internationale Veröffentlichungsnummer: WO 1999/060283

(56) Entgegenhaltungen:
- DE-A- 3 710 390
- FR-A- 1 267 022
- US-A- 2 295 316
- US-A- 2 742 769
- US-A- 3 545 231

## Beschreibung

Die vorliegende Erfindung betrifft eine elastische Wellenkupplung, die als Übertragungselement mindestens ein Torsionselement mit mindestens einem elastisch verformbaren Elastomerkörper aufweist, an dem axiale Anschlußflansche an- und abtriebsseitig fest angebracht sind, wobei die axiale Breite des Elastomerkörpers radial von innen nach außen gesehen zunimmt.

Bei derartigen Wellenkupplungen sind auf die axialen Stimflächen mindestens eines als Übertragungselement dienenden Gummikörpers Anschlußflansche fest anvulkanisiert. Über die Anschlußflansche wird die Wellenkupplung in den Antriebsstrang eingegliedert, wobei die Drehmomentübertragung ausschließlich über den Gummiwerkstoff des Elastomerkörpers erfolgt. Aufgrund ihrer Elastizität erfahren diese Torsionselemente bei Belastung eine Drehscherung um die Wellenachse. Drehmomentschwankungen werden dabei durch die Elastizität des oder der Gummikörper vom angeschlossenen Antriebsstrang entkoppelt.

Bei den im Betrieb typischen Lastwechseln tritt eine erhebliche dynamische Belastung der Übertragungselemente auf. Diese äußert sich zum einen in einer erheblichen Dehnungsbeanspruchung der Verbindung zwischen den Anschlußflanschen und dem Elastomerkörper. Zum anderen kommt es durch viskoelastische Effekte, d. h. innerer Reibung der Elastomerwerkstoffe, zu einer Umwandlung von mechanischer Energie in Wärme. Wegen der relativ niedrigen Wärmeleitfähigkeit des Gummimaterials können dadurch lokale thermische Spitzen, sogenannte Wärmenester, auftreten. Grundsätzlich sollten dabei materialspezifische Grenztemperaturen nicht überschritten werden, da ansonsten lokale Beschädigungen auftreten können. Dies gilt im besonderen Maße für den Bereich der äußeren Mantelflächen, da dort die Dehnung die größten Werte annimmt. Daraus ergibt sich eine besonders hohe Beanspruchung am Übergang der Gummi-Metall-Verbindung, was natürlich nicht zuletzt aufgrund der Kerbwirkung an der äußeren Grenzkante beachtenswert ist. Darüber hinaus sollte die mit der mechanischen Belastung einhergehende Erwärmung an der Materialoberfläche vorgegebene Grenzwerte nicht überschreiten, da ansonsten dort auftretende Alterungsprozesse überproportional beschleunigt würden.

Im Stand der Technik ist man den vorangehend erläuterten Problemen durch konstruktive Ausgestaltungen erfolgreich begegnet, so daß Gummikupplungen seit geraumer Zeit als überaus zuverlässige Bauelemente mit vorteilhaften Betriebseigenschaften gelten. Durch besondere konstruktive Ausgestaltungen werden dabei die lokalen Belastungen auf ein unschädliches Maß reduziert. Hierzu wird entweder unmittelbar die Entstehung der lokalen mechanischen bzw. thermischen Lasten eingeschränkt und/oder für eine effektive Kühlung gesorgt. Einige diesbezüglich vorteilhafte Maßnahmen sind beispielsweise in der DE 37 10 390 C2 angegeben. Darin sind die Anschlußflansche kegelmantelförmig ausgebildet, so daß der Gummikörper einen sich nach außen hin linear verbreiternden, V-förmigen Querschnitt erhält. Dadurch, daß die axiale Breite des Elastomerkörpers radial von innen nach außen gesehen zunimmt, haben die außenliegenden Fasern eine größere elastische Länge. Die sich dadurch ergebende geringere lokale Dehnung ist vorteilhaft im Hinblick auf die Wärmeentwicklung und die Beanspruchung der Gummi-Metall-Grenzflächen.

Die anfallende Verlustwärme wird über weitere Maßnahmen, wie die segmentierte Ausgestaltung der Übertragungselemente sowie die Einbringung von durchgehenden Kühlfenstern effektiv abgeführt.

Der Trend zu immer höheren Leistungsdichten bei gleichzeitig kleinerem Einbauraum macht jedoch eine weitergehende Optimierung der nach dem Stand der Technik bekannten Elastomerkupplungen erforderlich.

Aus der US-Patentschrift 2 742 769 ist eine elastische Wellenkupplung bekannt, welche einen Elastomerkörpers zwischen zwei Anschlußflanschen aufweist. Es hat sich jedoch gezeigt, daß derartige Elastomerkörper insbesondere bei schwankenden Drehmomenten schnell vornehmlich auf dem Außenradius versagen, obwohl das stationär zu ertragende Drehmoment nicht erreicht wird.

In der US-Patentschrift 2 295 316 wird ebenfalls eine elastische Wellenkupplungen mit Elastomerkörpern vorgestellt, wie sie in kleineren mechanischen Antrieben zur Anwendung kommen. Die Form der Elastomerkörper zwischen den Wellenenden führt jedoch dazu, daß der Elastomerkörper durch lokale Überlastungen insbesondere an der Elastomer-Metall-Grenzfläche zerstört wird.

Ausgehend von den erläuterten Nachteilen im Stand der Technik liegt der Erfindung die Aufgabe zugrunde, eine elastische Wellenkupplung zu schaffen, welche unter Berücksichtigung der materialspezifischen Belastbarkeit des Elastomers, der niedrigen Wärmeleitfähigkeit von Elastomeren und der nach außen hin zunehmenden Belastung des Elastomerkörpers ein niedriges Verhältnis der Spitzendehnung zur Grunddehnung aufweist und somit eine vielfach höhere Lebensdauer hat.

Zur Lösung dieser Aufgabe schlägt die Erfindung vor, daß die axiale Breite zumindest des äußersten Elastomerkörpers radial von innen nach außen gesehen im äußeren Bereich des Elastomerkörpers überproportional ansteigt, wobei die beiden axialen Anschlußflansche eine kontinuierlich relativ zueinander geschwungene Form ohne Knick in der Elastomer-Metall-Grenzfläche aufweisen.

Gemäß der Erfindung hat der Querschnitt des Elastomerkörpers zumindest einen inneren und einen äußeren radialen Bereich, wobei in dem äußeren Bereich die axiale Breite mit zunehmendem Radius schneller anwächst als in dem inneren Bereich. Während die Breite der Elastomerkörper im Stand der Technik durch die kegelmantel-förmigen Anschlußflansche über den gesamten Querschnitt lediglich linear, also proportional zunimmt, steigt erfindungsgemäß die wirksame elastische Breite nach außen hin zumindest abschnittsweise schneller an.

Eine besonders vorteilhafte Ausgestaltung der Erfindung sieht vor, daß der Querschnitt des Elastomerkörpers radial von innen nach außen gesehen glockenförmig aufgeweitet ist. Mit der glockenförmigen Ausgestaltung, die man auch als kelch- oder tulpenförmig bezeichnen könnte, ist ein kontinuierlich geschwungener, abgerundeter Übergang zwischen den einzelnen Bereichen gemeint. Die Vermeidung eines abgeknickten Verlaufes der Anschlußflansche führt zu einer gleichmäßigen Beanspruchung der Gummi-Metall-Grenzfläche. Unstetigkeiten werden dabei weitestgehend vermieden.

Die Erfindung kann selbstverständlich gleichermaßen an einem durchgehend ringförmig ausgebildeten als auch an einem segmentierten Elastomerkörper umgesetzt werden.

Der besondere Vorteil der Erfindung ergibt sich daraus, daß die elastische Weglänge in den äußeren Bereichen besser an die dort auftretenden, überproportional mit dem Radius ansteigenden mechanischen und thermischen Beanspruchungen abgestimmt wird. Dabei wird außerdem die äußere Mantelfläche des Elastomerkörpers soweit vergrößert, daß sich geringere lokale Dehnungen ergeben und zugleich eine bessere Wärmeabgabe an die Umgebungsluft erfolgt. Dadurch werden die eingangs erwähnten Alterungseffekte deutlich verringert. Bei einem gegebenen Betrag der Gesamt-Querschnittsfläche des Elastomerkörpers ergibt sich insgesamt eine homogenere Beanspruchung. Im Vergleich mit den vorbekannten Kupplungs-Bauformen, beispielsweise aus der bereits zitierten DE 37 10 390 C2 oder auch der DE 33 10 695 C2, wird somit die übertragbare Leistungsdichte gesteigert. Das bedeutet, daß für ein gegebenes Drehmoment die Kupplung kleiner ausfallen kann und damit weniger Einbauraum beansprucht. Alternativ kann bei einer Kupplung mit gleichbleibenden Abmessungen eine entsprechend höhere Leistung übertragen werden.

Zur Lösung der Eingangs erläuterten Problematik sieht eine besonders vorteilhafte Ausführungsform vor, daß das Übertragungselement mindestens einen inneren Elastomerkörper und mindestens einen äußeren Elastomerkörper aufweist, wobei die Elastomerkörper koaxial zur Kupplungsachse mit radialem Abstand voneinander angeordnet sind und dabei an- und abtriebsseitig einen gemeinsamen Anschlußflansch haben. Diese erfindungsgemäße Gestaltung kann in Verbindung mit den erfindungsgemäß sich überproportional nach außen hin verbreiternden Elastomerkörpern realisiert werden.

Ein derartig ausgebildetes Torsionselement weist nur in radialer Richtung einstückige, sondern mindestens zwei oder mehrere ring- oder segmentförmige, separate Elastomerkörper auf, die radialen Abstand voneinander haben, wobei sie sowohl auf der Antriebsseite als auch auf der Abtriebsseite jeweils einen radial durchgehenden, gemeinsamen Anschlußflansch haben. Das bedeutet, daß die jeweils äußeren die inneren Elastomerkörper unter Bildung von in Umfangrichtung durchgehenden Kühlkanälen umgeben.

Ein besonderer Vorteil der Erfindung ergibt sich daraus, daß die in Umfangsrichtung durchgehenden, luftdurchspülten Kühlkanäle axial durch die metallenen Anschlußflansche begrenzt werden. Die in dem schlecht wärmeleitenden Gummimaterial der Elastomerkörper bei dynamischer Belastung anfallende Wärme wird dadurch besonders gut abgeführt ,daß die in den Kühlkanälen entlangströmende Luft die aufgenommene Wärme direkt an die gut wärmeleitenden Anschlußflansche abgibt.

Die Bildung von kritischen lokalen thermischen Spitzenbelastungen im Gummimaterial kann bei der Erfindung zusätzlich dadurch verhindert werden, daß insbesondere die stark beanspruchten äußeren Elastomerkörper geringere radiale Abmessungen erhalten. Dadurch wird erstmals eine optimal auf die lokalen thermischen Belastungen abgestimmte Kühlung möglich, wodurch sich eine vorteilhafte, besonders gleichmäßige Beanspruchung des Elastomerwerkstoffs ergibt. Daraus resultiert der besondere Vorteil, daß sowohl die übertragbare Leistungsdichte als auch die Lebensdauer erhöht wird.

Bei einer Ausführungsform der Erfindung sind die Elastomerkörper an gemeinsamen einstückigen Anschlußflanschen angebracht. Das bedeutet, daß jeweils mehrere innere und äußere Elastomerkörper unmittelbar an einem radial durchgehenden Anschlußflansch anvulkanisiert sind. Je nach Bauform der Kupplung kann der Anschlußflansch ringförmig-einstückig oder aus Ringsegmenten zusammengesetzt ausgebildet sein. In der letztgenannten Ausführung haben die einzelnen Elastomerkörper ebenfalls die Form von Ringsegmenten.

Eine besonders vorteilhafte Alternative der erfindungsgemäßen Wellenkupplung sieht vor, daß die inneren und äußeren Elastomerkörper zur Bildung von Übertragungselement-Modulen mit separaten Anschlußflansch-Modulen versehen sind, die radial aufeinanderfolgend lösbar miteinander verbindbar sind. Der besondere Vorteil dieser Ausführungsform liegt darin, daß Wellenkupplungen in unterschiedlichen Baugrößen aus standardisierten Modulen baukasten-artig konstruierbar sind. Hierzu sind die Anschlußflansch-Module umfangsseitig mit korrespondierenden Anschlußmitteln versehen, beispielsweise mit verschraubbaren Flanschbohrungen. Auf diese Weise sind die Übertragungselement-Module radial kaskadierbar, wobei die gemeinsamen Anschlußflansche in ihrer Gesamtheit jeweils durch die miteinander verbundenen Anschlußflansch-Module gebildet werden.

Der modulartige Aufbau hat bei der Fertigung den Vorteil, daß die Übertragungselement-Module abgestuft mit unterschiedlichen Radien zur Verfügung gestellt werden können. Wellen kupplungen für unterschiedliche Leistungsklassen lassen sich daraus dann mit geringem Aufwand konfektionieren, ohne daß aufwendige und kostspielige Sonderanfertigungen erforderlich wären.

Ein weiterer Vorteil ist, daß im Betrieb verschlissene Übertragungselement-Module mit geringem Aufwand austauschbar sind und somit kurzfristig die Einsatzfähigkeit einer beschädigten Kupplung wieder herstellbar ist.

Zweckmäßigerweise sind die Anschlußflansch-Module der Übertragungselement-Module radial ineinander schachtelbar ausgebildet. Bei dieser Ausführungsform stehen die Anschlußflansch-Module jeweils radial über den Elastomerkörper vor. Die inneren und äußeren Module sind dabei so aufeinander abgestimmt, daß die Anschlußflansche des einen Moduls radial zwischen die Anschlußflansche des nach innen oder außen sich anschließenden nächsten Moduls einsteckbar sind. Zur lösbaren Verbindung miteinander weisen die Anschlußflansch-Module in den radialen Randbereichen miteinander korrespondierende axiale Flanschbohrungen zur Verschraubung auf. Die Befestigung erfolgt dann mittels Flanschbolzen.

Die Übertragungselement-Module können alternativ segmentiert oder durchgehend ringförmig ausgebildet sein. Bei der geteilten Ausführungsform sind die Anschlußflansch-Segmente der äußeren Module zur Montage ohne weiteres radial kaskadierbar. Sind die Anschlußflansch-Module jedoch ringförmig-geschlossen ausgebildet, müssen sie zur koaxialen Montage zunächst in axialer Richtung zusammengesetzt und dann mit geeigneten Anschlußmitteln fest miteinander verbunden werden, beispielsweise durch Verschraubung. Hierzu können nachträglich ansetzbare Befestigungsteile verwendet werden, wie etwa Flanschringe oder dergleichen. Eine besonders vorteilhafte Variante, die ohne solche Zusatzteile auskommt und dennoch eine symmetrisch geschachtelte Bauform ermöglicht, sieht vor, daß die Anschlußflansch-Module bajonettartig ausgestaltet sind. Dabei weisen die Anschlußflansche korrespondierende Innen- und Außenbajonette mit radialen Aussparungen und Vorsprüngen auf, so daß in Montageposition zunächst ein Flanschring in axialer Richtung über den nächst kleineren Anschlußflansch hinweg positionierbar ist und anschließend in der koaxialen Einbaulage durch eine Relativdrehung axial verriegelbar ist. Die sich in dieser Sperrstellung gegenüberstehenden Vorsprünge werden dann miteinander verschraubt.

Vorzugsweise ist ein äußerer Elastomerkörper axial breiter als ein innerer Elastomerkörper. Damit wird dem Umstand Rechnung getragen, daß die Schubnennspannung radial von innen nach außen gesehen konstant bleibt.

Um eine nochmalig verbesserte Anpassung an die tatsächlich auftretenden Belastungen zu erreichen, ist es vorteilhaft, daß die axiale Breite der inneren und äußeren Elastomerkörper von innen nach außen gesehen zumindest abschnittsweise überproportional ansteigt. Der radiale Elastomerquerschnitt erhält somit radial von innen nach außen gesehen einen glocken- bzw. tulpenförmigen Querschnitt. Dies kann sich sowohl auf jeden einzelnen Elastomerkörper, als auch auf die Gesamtheit der Elastomerkörper in der Wellenkupplung beziehen. Auf diese Weise wird die lokale Beanspruchung vergleichmäßigt und entsprechend die Lebensdauer erhöht.

Zur Verbesserung der Kühlung kann jedes Übertragungselement axial durchgehende Kühlfenster aufweisen.

Zusätzlich können in den Elastomerkörper Kühlelemente unlösbar eingebettet sein. Dabei handelt es sich um Bauteile aus gut wärmeleitendem Material, die in dem Elastomer durch Kernbereiche mit maximaler Wärmeentwicklung und relativ dazu kühleren Außenbereichen verlaufen. Damit sorgen sie für eine effektive Wärmeabfuhr aus den kritischen Bereichen. In einem Torsionselement sind diese Kühlelemente vorzugsweise als axiale Kühlbleche ausgebildet und erstrecken sich zumindest bis an die äußere Oberfläche der jeweiligen Elastomerkörper. Wenn sie nach außen vorstehen, hat dies fertigungstechnisch den Vorteil, daß sie beim Einspritzen des Gummis während des Vulkanisierens in den vorstehenden Bereichen sicher und fest eingespannt werden können.

Um die Verbindung des Elastomerkörpers mit den Anschlußflanschen auch für höchste Beanspruchungen zu optimieren, ist es von Vorteil, daß der Anschlußflansch axial und/oder radial vorstehende Halteschultem aufweist, die von dem Elastomerkörper umgriffen werden. Vorzugsweise sind diese Halteschultem als Ringschultem mit gerundetem Querschnitt ausgebildet. Dadurch wird eine bessere Haftung der Vuikanisationsverbindung in den besonders beanspruchten Randbereichen erreicht.

Ein Ausführungsbeispiel der Erfindung wird im folgenden anhand der Zeichnung näher erläutert. Es zeigt im einzelnen:

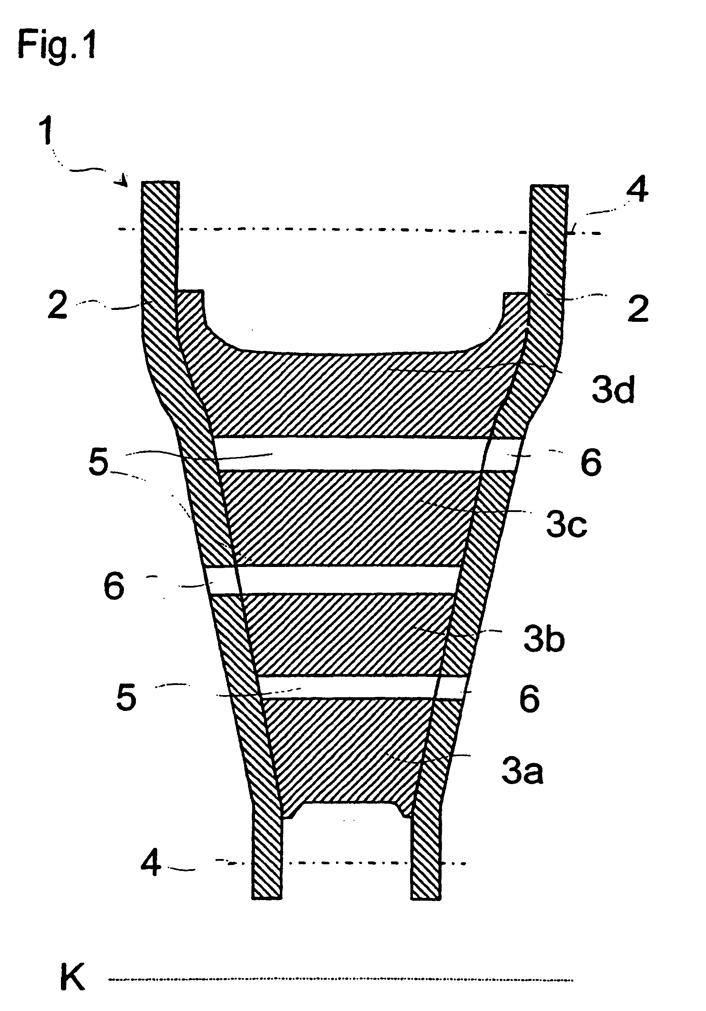

- Fig. 1: einen Querschnitt durch ein erfindungsgemäßes Übertragungsselement.

In Fig. 1 ist schematisch ein radialer Querschnitt durch eine erfindungsgemäßes Torsionselement dargestellt, welches darin als Ganzes mit dem Bezugszeichen 1 versehen ist. Die Kupplungsachse K befindet sich in der dargestellten Ansicht in der Zeichnung unten.

Das Torsionselement 1 kann sowohl ringförmig, als auch segmentiert ausgebildet sein.

Das Torsionselement 1 weist axiale, aus Stahl bestehende Anschlußflansche 2 auf, die axial an Gummikörper 3a, 3b, 3c und 3d anvulkanisiert sind.

Die Anschlußflansche 2 stehen radial über die Gummikörper 3a,3b,3c,3d vor und sind in diesen Bereichen mit axialen Flanschbohrungen 4 versehen. Mittels durch diese Flanschbohrungen 4 gesteckter, im einzelnen nicht dargestellter Schraubbolzen kann das Übertragungselement 1 in einen Antriebsstrang eingegliedert werden - oder - können mehrere derartige Übertragungselemente 1 radial kaskadiert werden.

In ihrem inneren Bereich stehen die Anschlußflansche 2 V-förmig zueinander. Dadurch nimmt die axiale Breite der dazwischen befindlichen Gummikörper 3a,3b,3c,3d radial von innen nach außen gesehen gleichmäßig zu. Im äußeren Bereich sind die Anschlußflansche 2 relativ zueinander geschwungen nach außen hin ausgeweitet, so daß die axiale Breite der Gummikörper 3 in diesem Bereich überproportional zunimmt. Dadurch ergibt sich die erfindungsgemäße Tulpen- bzw. Glockenform des aus den Gummikörpem 3a,3b,3c,3d gebildeten, gesamten Elastomer-Kupplungskörpers.

Zwischen den Gummikörpem 3a,3b,3c und 3d verlaufen in Umfangsrichtung durchgehende Kühlkanäle 5.

Die Anschlußflansche 2 sind mit Kühlfenstem 6 versehen.

## Patentansprüche

1. Elastische Wellenkupplung, die als Übertragungselement (1) mindestens ein Torsionselement (1) mit mindestens einem elastisch verformbaren Etastomerkörper (3) aufweist, an dem axiale Anschlußflansche (2) an- und abtriebsseitig fest angebracht sind, wobei die axiale Breite des Elastomerkörpers (3) radial von innen nach außen gesehen zunimmt, **dadurch gekennzeichnet, daß** die axiale Breite zumindest des äußersten Elastomerkörpers (3) radial von innen nach außen gesehen im äußeren Bereich des Elastomerkörpers (3) überproportional ansteigt, wobei die beiden axialen Anschlußflansche (2) eine kontinuierlich relativ zueinander geschwungene Form ohne Knick in der Elastomer-Metall-Grenzfläche aufweisen.

2. Wellenkupplung nach Anspruch 1, **dadurch gekennzeichnet, daß** das Übertragungselement (1) mindestens einen innere Elastomerkörper (3a) und mindestens einen äußeren Elastomerkörper (3d) aufweist, wobei die Elastomerkörper (3a, 3b, 3c, 3d) koaxial zur Kupplungsachse (K) mit radialem Abstand voneinander angeordnet sind und dabei an- und abtriebsseitig einen gemeinsamen Anschlußflansch (2) haben.

3. Wellenkupplung nach Anspruch 2, **dadurch gekennzeichnet, daß** die Elastomerkörper (3a, 3b, 3c, 3d) an gemeinsamen einstückigen Anschlußflanschen (2) angebracht sind.

4. Wellenkupplung nach Anspruch 2, **dadurch gekennzeichnet, daß** die Elastomerkörper (3a, 3b, 3c) zur Bildung von Übertragungselement-Modulen mit separaten Anschlußflansch-Modulen versehen sind, die radial aufeinanderfolgend lösbar miteinander verbindbar sind.

5. Wellenkupplung nach Anspruch 4, **dadurch gekennzeichnet, daß** die Anschlußflansch-Module der Übertragungselement-Module in radialer Richtung ineinander schachtelbar sind.

6. Wellenkupplung nach Anspruch 4, **dadurch gekennzeichnet, daß** die Anschlußflansch-Module in den radialen Randbereichen axiale Flanschbohrungen (4) zur Verschraubung miteinander aufweisen.

7. Wellenkupplung nach Anspruch 4, **dadurch gekennzeichnet, daß** die Anschlußflansch-Module segmentiert sind.

8. Wellenkupplung nach Anspruch 4, **dadurch gekennzeichnet, daß** die Anschlußflansch-Module ringförmig sind.

9. Wellenkupplung nach Anspruch 8, **dadurch gekennzeichnet, daß** die Anschlußflansch-Module bajonettartig ausgestaltet sind.

10. Wellenkupplung nach Anspruch 2, **dadurch gekennzeichnet, daß** ein äußerer Elastomerkörper (3b) axial breiter ist als ein innerer Elastomerkörper (3a).

11. Wellenkupplung nach Anspruch 1 oder 2, **dadurch gekennzeichnet, daß** die Elastomerkörper (3a, 3b, 3c) ringförmig ausgebildet sind.

12. Wellenkupplung nach Anspruch 1 oder 2, **dadurch gekennzeichnet, daß** die Elastomerkörper (3a, 3b, 3c) segmentiert ausgebildet sind.

13. Wellenkupplung nach Anspruch 1 oder 2, **dadurch gekennzeichnet, daß** das Übertragungselement (1) axial durchgehende Kühlfenster (6) aufweist.

14. Wellenkupplung nach Anspruch 1 oder 2, **dadurch gekennzeichnet, daß** in die Elastomerkörper (3a, 3b, 3c) Kühlelemente unlösbar eingebettet sind.

15. Wellenkupplung nach Anspruch 14, **dadurch gekennzeichnet, daß** die Kühlelemente als axiale Kühlbleche ausgebildet sind.

16. Wellenkupplung nach Anspruch 14, **dadurch gekennzeichnet, daß** die Kühlelemente sich zumindest bis an die äußere Oberfläche der Elastomerkörper (3a, 3b, 3c) erstrecken.

17. Wellenkupplung nach Anspruch 1 oder 2, **dadurch gekennzeichnet, daß** die Anschlußflansche axial und/oder radial vorstehende Halteschultern aufweisen, die von den Elastomerkörpern (3a, 3b, 3c) übergriffen werden.

## Claims

1. Elastic shaft coupling which, as transmisson element (1), has at least one torsion element (1) with at least one elastically deformable elastomer body (3), to which axial connection flanges (2) are firmly attached on the drive side and on the take-off side, the axial width of the elastomer body (3) increasing radially as seen from the inside to the outside, **characterized in that** the axial width of at least the outermost elastomer body (3) increases superproportionally, as seen from the inside to the outside in the outer area of the elastomer body (3), the two axial connection flanges (2) having a form continuously curved relative to each other without a break in the elastomer-metal boundary surface.

2. Shaft coupling according to claim 1, **characterized in that** the transmission element (1) has at least one inner elastomer body (3a) and at least one external elastomer body (3d), the elastomer bodies (3a, 3b, 3c, 3d) being arranged coaxial to the coupling axis (K) radially distanced from each other and having a common connection flange on the drive and take-off sides.

3. Shaft coupling according to claim 2, **characterized in that** the elastomer bodies (3a, 3b, 3c, 3d) are attached to common one-piece connection flanges (2).

4. Shaft coupling according to claim 2, **characterized in that** for the formation of transmission element modules the elastomer bodies (3a, 3b, 3c) are provided with separate connection flange modules, which can be releasably connected radially one after the other.

5. Shaft coupling according to claim 4, **characterized in that** the connection flange modules of the transmission element modules are able to nest in each other in radial direction.

6. Shaft coupling according to claim 4, **characterized in that**, in the radial edge areas, the connection flange modules have axial flange bores (4) for screwing together.

7. Shaft coupling according to claim 4, **characterized in that** the connection flange modules are segmented.

8. Shaft coupling according to claim 4, **characterized in that** the connection flange modules are ring-shaped.

9. Shaft coupling according to claim 8, **characterized in that** the connection flange modules are designed bayonet-like.

10. Shaft coupling according to claim 2, **characterized in that** an outer elastomer body (3b) is axially wider than an inner elastomer body (3a).

11. Shaft coupling according to claim 1 or 2, **characterized in that** the elastomer bodies (3a, 3b, 3c) are developed ring-shaped.

12. Shaft coupling according to claim 1 or 2, **characterized in that** the elastomer bodies (3a, 3b, 3c) are developed segmented.

13. Shaft coupling according to claim I or 2, **characterized in that** the transmission element (1) has axially continuous cooling windows (6).

14. Shaft coupling according to claim 1 or 2, **characterized in that** cooling elements are nondetachably embedded in the elastomer bodies (3a, 3b, 3c).

15. Shaft coupling according to claim 14, **characterized in that** the cooling elements are developed as axial cooling plates.

16. Shaft coupling according to claim 14, **characterized in that** the cooling elements extend at least as far as the outer surface of the elastomer bodies (3a, 3b, 3c).

17. Shaft coupling according to claim 1 or 2, **characterized in that** the connection flanges have axially and/or radially projecting supporting shoulders, over which the elastomer bodies (3a, 3b, 3c) engage.

## Revendications

1. Accouplement d'arbre élastique, qui présente comme élément de transmission (1) au moins un élément de torsion (1) avec au moins un corps élastomère (3) élastiquement déformable, auquel sont fixées solidement des brides de raccordement axiales (2) côtés menant et mené, où la largeur axiale du corps élastomère (3) augmente radialement vue de l'intérieur à l'extérieur, **caractérisé en ce que** la largeur axiale au moins du corps élastomère le plus extérieur (3) augmente d'une manière sur-proportionnelle radialement vue de l'intérieur à l'extérieur dans la zone extérieure du corps élastomère (3), où les deux brides de raccordement axiales (2) ont une forme courbée d'une manière continue l'une relativement à l'autre sans pli dans la face limite élastomère - métal.

2. Accouplement d'arbre selon la revendication 1, **caractérisé en ce que** l'élément de transmission présente au moins un corps élastomère intérieur (3a) et au moins un corps élastomère extérieur (3d), où les corps élastomères (3a, 3b, 3c, 3d) sont disposés coaxialement à l'axe d'accouplement (K) avec un écart radial les uns des autres et, ce faisant, ont une bride de raccordement commune côtés menant et mené.

3. Accouplement d'arbre selon la revendication 2, **caractérisé en ce que** les corps élastomères (3a, 3b, 3c, 3d) sont fixés à des brides de raccordement communes (2) en une pièce.

4. Accouplement d'arbre selon la revendication 2, **caractérisé en ce que** les corps élastomères (3a, 3b, 3c), pour former des modules d'éléments de transmission, sont pourvus de modules de brides de raccordement séparés qui, en se suivant radialement, peuvent être reliés relâchablement les uns aux autres.

5. Accouplement d'arbre selon la revendication 4, **caractérisé en ce que** les modules de brides de raccordement des modules d'éléments de transmission peuvent être emboîtés les uns dans les autres dans la direction radiale.

6. Accouplement d'arbre selon la revendication 4, **caractérisé en ce que** les modules de brides de raccordement, dans les zones de bord radiales, présentent des perçages de bride axiaux (4) pour l'assemblage par vissage.

7. Accouplement d'arbre selon la revendication 4, **caractérisé en ce que** les modules de brides de raccordement sont segmentés.

8. Accouplement d'arbre selon la revendication 4, **caractérisé en ce que** les modules de brides de raccordement sont annulaires.

9. Accouplement d'arbre selon la revendication 8, **caractérisé en ce que** les modules de brides de raccordement sont réalisés à la manière d'une baïonnette.

10. Accouplement d'arbre selon la revendication 2, **caractérisé en ce qu'**un corps élastomère extérieur (3b) est axialement plus large qu'un corps élastomère intérieur (3a).

11. Accouplement d'arbre selon la revendication 1 ou 2, **caractérisé en ce que** les corps élastomères (3a, 3b, 3c) sont réalisés en une forme annulaire.

12. Accouplement d'arbre selon la revendication 1 ou 2, **caractérisé en ce que** les corps élastomères (3a, 3b, 3c) sont réalisés d'une manière segmentée.

13. Accouplement d'arbre selon la revendication 1 ou 2, **caractérisé en ce que** l'élément de transmission (1) présente des fenêtres de refroidissement (6) axialement traversantes.

14. Accouplement d'arbre selon la revendication 1 ou 2, **caractérisé en ce que** des éléments de refroidissement sont noyés de manière non relâchable dans les corps élastomères (3a, 3b, 3c).

15. Accouplement d'arbre selon la revendication 14, **caractérisé en ce que** les éléments de refroidissement sont réalisés comme tôles de refroidissement axiales.

16. Accouplement d'arbre selon la revendication 14, **caractérisé en ce que** les éléments de refroidissement s'étendent au moins jusqu'à la surface extérieure des corps élastomères (3a, 3b, 3c).

17. Accouplement d'arbre selon la revendication 1 ou 2, **caractérisé en ce que** les brides de raccordement présentent des épaulements de retenue faisant saillie axialement et/ou radialement sur lesquelles passent les corps élastomères (3a, 3b, 3c).
